# EUROPEAN PATENT APPLICATION

(11) **EP 4 757 350 A1**
(43) Date of publication of application: **10.06.2026**
(21) Application number: 25220914.3
(22) Date of filing: 04.12.2025
(51) Int. Cl.: H04W 4/021, G05D 1/229

(54) **PROGRAM, INFORMATION PROCESSING APPARATUS, AND INFORMATION PROCESSING METHOD**

(30) Priority: 04.12.2024 JP 2024210978
(71) Applicant: Toyota Jidosha Kabushiki Kaisha, Toyota-shi, Aichi-ken 471-8571 (JP)
(72) Inventor: KATO, Shodai, Toyota-shi, 471-8571 (JP)
(74) Representative: D Young & Co LLP

(57) **Abstract**

An information processing apparatus is configured to execute: acquiring a current position as measured by a positioning module; acquiring a measurement precision of the current position; determining whether the current position is inside or outside an object geofence; weighting a determination result of the object geofence with the measurement precision; accumulating weighted determination results by repeatedly acquiring the current position, acquiring the measurement precision, determining the object geofence, and weighting the determination result with the measurement precision; when a sum of weights of determination results of either inside or outside in the accumulated determination results exceeds a threshold, ascertaining a determination result of the object geofence with whichever determination result having exceeded the threshold; and outputting information related to the ascertained determination result.

## Description

### BACKGROUND

### Technical Field

The present disclosure relates to a program, an information processing apparatus, and an information processing method.

### Description of the Related Art

In recent years, there have been advances in the development of technology to utilize geofences. A geofence is an area enclosed by a virtual boundary. In geofence technology, basically, whether a user (or device) is inside or outside a geofence is determined according to a current position of the user (or device). The inside/outside determination may include a determination of whether the user (or device) has entered the geofence or exited the geofence. Subsequently, according to a result of the inside/outside determination, an arbitrary action is executed.

For example, Japanese Translation of PCT International Application Publication No. 2016-528564 proposes a system that acquires a position of a user device, determines whether or not the user device has entered a geofence based on the acquired position, and provides a warning if the user device is determined to have entered the geofence. In addition, Japanese Translation of PCT International Application Publication No. 2018-507568 proposes a system in which a server apparatus delivers definition data of a geofence that exists within a predetermined range (threshold distance range) from a current position of a client apparatus to each client apparatus, and each client apparatus executes determination processing of the geofence according to the delivered definition data.

### SUMMARY

An object of the present disclosure is to provide a technique for improving determination precision of a geofence.

A program according to a first mode of the present disclosure is a program for causing a computer to execute an information processing method. The information processing method includes: acquiring a current position as measured by a positioning module; acquiring a measurement precision of the acquired current position; determining whether the acquired current position is inside or outside an object geofence; weighting a determination result of the object geofence with the acquired measurement precision; accumulating weighted determination results by repeatedly acquiring the current position, acquiring the measurement precision, determining whether the current position is inside or outside the object geofence, and weighting the determination result with the measurement precision; when a sum of weights of determination results of either inside or outside in the accumulated determination results exceeds a threshold, ascertaining a determination result of the object geofence with whichever determination result having exceeded the threshold; and outputting information related to the ascertained determination result.

An information processing apparatus according to a second mode of the present disclosure includes a controller. The controller is configured to execute: acquiring a current position as measured by a positioning module; acquiring a measurement precision of the acquired current position; determining whether the acquired current position is inside or outside an object geofence; weighting a determination result of the object geofence with the acquired measurement precision; accumulating weighted determination results by repeatedly acquiring the current position, acquiring the measurement precision, determining whether the current position is inside or outside the object geofence, and weighting the determination result with the measurement precision; when a sum of weights of determination results of either inside or outside in the accumulated determination results exceeds a threshold, ascertaining a determination result of the object geofence with whichever determination result having exceeded the threshold; and outputting information related to the ascertained determination result.

An information processing method according to a third mode of the present disclosure is executed by a computer. The information processing method includes: acquiring a current position as measured by a positioning module; acquiring a measurement precision of the acquired current position; determining whether the acquired current position is inside or outside an object geofence; weighting a determination result of the object geofence with the acquired measurement precision; accumulating weighted determination results by repeatedly acquiring the current position, acquiring the measurement precision, determining whether the current position is inside or outside the object geofence, and weighting the determination result with the measurement precision; when a sum of weights of determination results of either inside or outside in the accumulated determination results exceeds a threshold, ascertaining a determination result of the object geofence with whichever determination result having exceeded the threshold; and outputting information related to the ascertained determination result.

According to the present disclosure, an improvement in determination precision of a geofence can be expected.

### BRIEF DESCRIPTION OF THE DRAWINGS

Fig. 1 schematically illustrates an example of a situation where the present disclosure is applied;
Fig. 2 schematically illustrates an example of a situation in which a determination result and a threshold according to the present disclosure are compared;
Fig. 3 schematically illustrates an example of a method of defining a geometry (area) of a geofence according to the present disclosure;
Fig. 4 schematically illustrates an example of a method of defining a geometry (area) of a geofence according to the present disclosure;
Fig. 5 schematically illustrates an example of a method of defining a geometry (area) of a geofence according to the present disclosure;
Fig. 6 schematically illustrates an example of a method of integrating geometries according to the present disclosure;
Fig. 7 schematically illustrates an example of a method of integrating geometries according to the present disclosure;
Fig. 8 schematically illustrates an example of a method of integrating geometries according to the present disclosure;
Fig. 9 schematically illustrates an example of a configuration of geofence definition data according to the present disclosure;
Fig. 10 schematically illustrates an example of a hardware configuration of an information processing apparatus according to the present disclosure;
Fig. 11 schematically illustrates an example of a software configuration of the information processing apparatus according to the present disclosure; and
Fig. 12 is a flow chart illustrating an example of a processing procedure related to an inside/outside determination of a geofence according to the present disclosure.

### DESCRIPTION OF THE EMBODIMENTS

Conventionally, a determination result of a geofence is obtained by determining whether a current position as measured by a positioning module is inside or outside of the geofence. In this case, an error may occur in the measurement of the position by the positioning module. When executing an inside/outside determination of a geofence according to a current position as measured by the positioning module, due to the occurrence of an error in the measured current position, an error may arise in the executed inside/outside determination.

In contrast, the program according to the first mode of the present disclosure is a program for causing a computer to execute an information processing method. The information processing method includes: acquiring a current position as measured by a positioning module; acquiring a measurement precision of the acquired current position; determining whether the acquired current position is inside or outside an object geofence; weighting a determination result of the object geofence with the acquired measurement precision; accumulating weighted determination results by repeatedly acquiring the current position, acquiring the measurement precision, determining whether the current position is inside or outside the object geofence, and weighting the determination result with the measurement precision; when a sum of weights of determination results of either inside or outside in the accumulated determination results exceeds a threshold, ascertaining a determination result of the object geofence with whichever determination result having exceeded the threshold; and outputting information related to the ascertained determination result.

In the first mode of the present disclosure, the determination result of a geofence is weighted according to the measurement precision of the current position. A final determination result is ascertained through a plurality of attempts at determination including the weighting. Accordingly, the measurement precision of the position can be reflected in the determination result together with the number of times a same determination result has been obtained. In other words, not only the number of times the same determination result has been obtained but a quality of the measurement precision of the position is also used as an indicator for ascertaining the determination result. By accumulating the quality of the measurement precision of the position along with the number of times that the same determination result has been obtained, a certainty of the determination result can be increased, for example, by increasing the number of determinations when the measurement precision of the position is low or respecting determination results with high measurement precision. Therefore, according to the first mode of the present disclosure, an improvement in determination precision of a geofence can be expected even in a situation where an error can occur in the measurement of a position by a positioning module.

Note that the form of the present disclosure need not be limited to the program described above. As another form of the program according to the mode described above, an aspect of the present disclosure may be any of an information processing apparatus that realizes all of or part of each component described above, an information processing method, or a storage medium readable by a machine such as a computer that stores a program. In this case, the storage medium readable by a machine may be a non-transitory medium that accumulates information such as programs by an electrical action, a magnetic action, an optical action, a mechanical action, or a chemical action. The non-transitory storage medium may include a storage medium (CD, DVD, semiconductor memory, or the like), an auxiliary storage apparatus of a computer, or an external main memory connected to a computer.

For example, the information processing apparatus according to the second mode of the present disclosure may include a controller. The controller may be configured to execute: acquiring a current position as measured by a positioning module; acquiring a measurement precision of the acquired current position; determining whether the acquired current position is inside or outside an object geofence; weighting a determination result of the object geofence with the acquired measurement precision; accumulating weighted determination results by repeatedly acquiring the current position, acquiring the measurement precision, determining whether the current position is inside or outside the object geofence, and weighting the determination result with the measurement precision; when a sum of weights of determination results of either inside or outside in the accumulated determination results exceeds a threshold, ascertaining a determination result of the object geofence with whichever determination result having exceeded the threshold; and outputting information related to the ascertained determination result.

In addition, for example, the information processing method according to the third mode of the present disclosure may be executed by a computer. The information processing method may include: acquiring a current position as measured by a positioning module; acquiring a measurement precision of the acquired current position; determining whether the acquired current position is inside or outside an object geofence; weighting a determination result of the object geofence with the acquired measurement precision; accumulating weighted determination results by repeatedly acquiring the current position, acquiring the measurement precision, determining whether the current position is inside or outside the object geofence, and weighting the determination result with the measurement precision; when a sum of weights of determination results of either inside or outside in the accumulated determination results exceeds a threshold, ascertaining a determination result of the object geofence with whichever determination result having exceeded the threshold; and outputting information related to the ascertained determination result.

Hereinafter, an embodiment according to an aspect of the present disclosure will be described based on the drawings. However, note that the present embodiment described below is in all respects merely illustrative of the present disclosure. Various improvements or modifications may be made without departing from the scope of the present disclosure. In implementing the present disclosure, specific configurations in accordance with embodiments may be adopted as appropriate. Although the data appearing in the present embodiment is described by natural language, more specifically, the data is designated by pseudo-language, commands, parameters, machine language, electrical signals, and the like which can be recognized by computers and other machines.

### [1 Example of application]

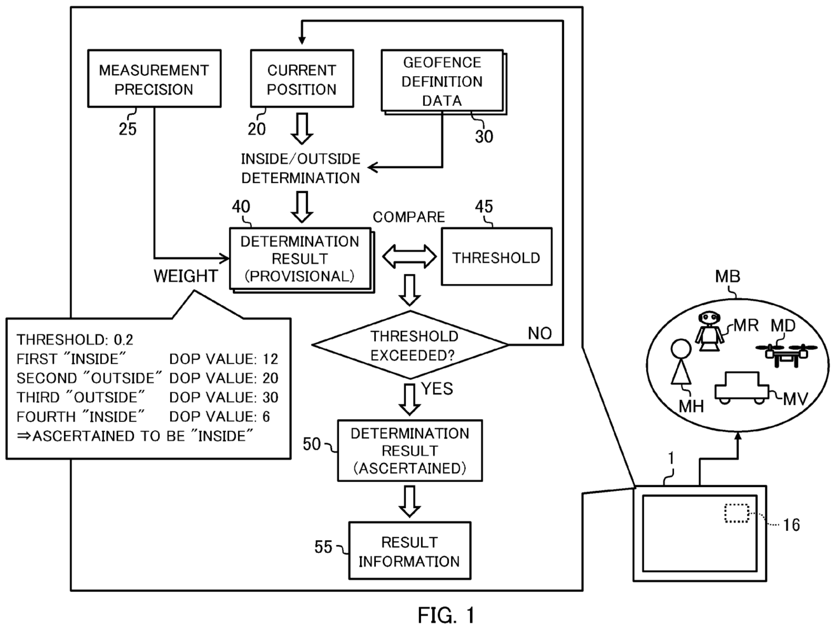

Fig. 1 schematically illustrates an example of a situation where the present disclosure is applied. An information processing apparatus 1 according to the present embodiment is one or more computers configured to hold geofence definition data 30 in a memory resource and execute determination processing of a geofence that is defined by the held geofence definition data 30 at any timing.

The information processing apparatus 1 according to the present embodiment acquires a current position 20 as measured by a positioning module 16. The information processing apparatus 1 acquires a measurement precision 25 of the acquired current position 20. The information processing apparatus 1 determines whether the acquired current position 20 is inside or outside an object geofence. Accordingly, the information processing apparatus 1 obtains a provisional determination result 40 of the object geofence. The information processing apparatus 1 weights the determination result 40 of the object geofence with the acquired measurement precision 25. The information processing apparatus 1 compares a sum of weights of each of the determination results of being inside and the determination results of being outside with a threshold 45. By repeatedly acquiring the current position 20, acquiring the measurement precision 25, determining whether the current position 20 is inside or outside the object geofence, and weighting the determination result 40 with the measurement precision 25 until the sum of weights of the determination results of either inside or outside exceeds the threshold 45, the information processing apparatus 1 accumulates the weighted determination results 40. When the sum of weights of the determination results of either inside or outside in the accumulated determination results 40 exceeds the threshold 45, the information processing apparatus 1 ascertains a determination result 50 of the object geofence with whichever determination result having exceeded the threshold 45. The information processing apparatus 1 outputs information (result information) 55 related to the ascertained determination result 50.

Note that in one example, the determination results (determination results 40 and 50) of a geofence may be configured to indicate whether the current position (current position 20) is inside or outside the geofence. In addition, the determination of the geofence may be executed continuously. When the determination of the geofence is executed continuously, the information processing apparatus 1 may further determine a transition state of the current position (current position 20) with respect to the geofence according to previous and current ascertained determination results (determination results 50). A type of the transition state may be defined as appropriate in accordance with the embodiment. In one example, the type of the transition state may include at least one of staying outside the geofence, entering the geofence from outside, staying inside the geofence, and exiting the geofence to the outside. Note that, in the following description, determining whether the current position is inside or outside a geofence (in other words, the determination of a geofence) will also be referred to as an "inside/outside determination of a geofence".

As described above, in the present embodiment, the determination result 40 of a geofence is weighted according to the measurement precision 25 of the current position 20. The final determination result 50 is ascertained through a plurality of attempts at determination including the weighting. Accordingly, the measurement precision 25 of the position can be reflected in the determination result 50 together with the number of times a same determination result has been obtained. In other words, not only the number of times the same determination result has been obtained but a quality of the measurement precision 25 of the position is also used as an indicator for ascertaining the determination result (obtaining the ascertained determination result 50). By accumulating the quality of the measurement precision 25 of the position along with the number of times that the same determination result has been obtained, a certainty of the determination result 50 can be increased, for example, by increasing the number of determinations when the measurement precision 25 of the position is low or respecting determination results 40 with high measurement precision 25. Therefore, according to the present embodiment, an improvement in the determination precision of a geofence can be expected even in a situation where an error can occur in the measurement of a position by the positioning module 16.

### [Information processing apparatus]

A determination object of a geofence may be any movable object (including a person). In one example, the information processing apparatus 1 may be one or more computers configured to monitor a position of a movable object that can be a determination object of a geofence. The information processing apparatus 1 may be arbitrarily deployed with respect to the object. In one example, the information processing apparatus 1 may be at least temporarily deployed in the object. In another example, the information processing apparatus 1 may be deployed outside of the object. Being deployed outside of the object may include being deployed remotely with respect to the object. In addition, in one example, when deployed in the object, the information processing apparatus 1 may constitute at least a part of the object. Accordingly, the information processing apparatus 1 may be considered as the object itself. In another example, the information processing apparatus 1 may be given separately from the object. When the object includes another computer, the information processing apparatus 1 may or may not be connected to the other computer included in the object.

In the present embodiment, the information processing apparatus 1 is configured to be capable of acquiring a current position (current position 20) as measured by the positioning module 16. The positioning module 16 may be arranged at any location where a position of the object can be measured. In one example, the information processing apparatus 1 may have the positioning module 16 provided inside (in other words, built in). In addition, in another example, when the information processing apparatus 1 is given separately from the object, the positioning module 16 may be deployed in the object (in other words, outside of the information processing apparatus 1) instead of in the information processing apparatus 1. The information processing apparatus 1 may be directly or indirectly connected to the positioning module 16 deployed outside. Being indirectly connected may be constituted of being connected via a network (such as a controller area network), another computer, or the like.

Note that the current position 20 may be the position as measured by the positioning module 16 as it is, a position obtained by correcting a measurement result of the positioning module 16 in any way, or a position predicted from the measurement result of the positioning module 16. In one example, when the information processing apparatus 1 is given separately from the object, due to the information processing apparatus 1 including the positioning module 16 being deployed in the object (in other words, the positioning module 16 being mounted to the information processing apparatus 1 deployed in the object), the positioning module 16 may indirectly measure the current position of the object. In another example, the positioning module 16 may directly measure the current position of the object by being mounted to the object.

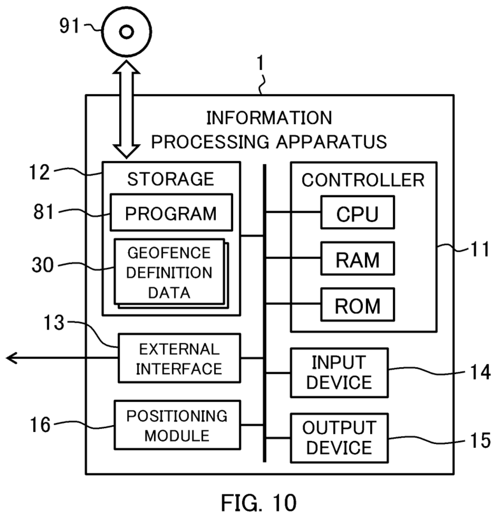

The positioning module 16 is configured to measure a position. A type of the positioning module 16 need not be particularly limited as long as the positioning module 16 is capable of measuring positions and may be selected as appropriate in accordance with the embodiment. For example, the positioning module 16 may be constituted of a global positioning system (GPS) sensor, a global navigation satellite system (GNSS) sensor, or the like. In addition, for example, the positioning module 16 may be configured to estimate a distance to each base station (wireless access point) according to an intensity of a signal received from each base station. The positioning module 16 may be configured to measure a position by any method (such as trilateration) based on an estimated distance to each base station. In this case, in one example, the positioning module 16 may be constituted of a processor resource (a CPU in Fig. 10) and a communication module (an external interface 13 in Fig. 10). A type of the base stations may be selected as appropriate in accordance with the embodiment.

### (Object)

As illustrated in Fig. 1, in one example, the movable object may be a mobile object MB. A type of the mobile object MB need not be particularly limited as long as the mobile object MB is movable and may be selected as appropriate in accordance with the embodiment. The mobile object MB may be, for example, a person MH, a vehicle MV, a flying object MD, a robot apparatus MR, or other mobile objects (such as a ship). The flying object MD may include a drone. The robot apparatus MR may include all kinds of movable robot apparatuses.

In one example, the positioning module 16 may be deployed in the vehicle MV. A deployment mode of the positioning module 16 need not be particularly limited as long as the positioning module 16 is capable of measuring positions of the vehicle MV and may be determined as appropriate in accordance with the embodiment. The positioning module 16 may be directly deployed in the vehicle MV or indirectly deployed in the vehicle MV by being mounted to the information processing apparatus 1 that is deployed at least temporarily in the vehicle MV. Accordingly, the acquired current position 20 may be constituted of a current position of the vehicle MV. According to one example of the present embodiment, an improvement in the determination precision of a geofence can be expected in a situation where a determination of the geofence is executed with respect to the current position of the vehicle MV.

Note that a type of the vehicle MV need not be particularly limited and may be selected as appropriate in accordance with the embodiment. The vehicle MV may include a manually operated vehicle and an autonomous vehicle. The vehicle MV may be selected from, for example, a motorcycle, a three-wheeled vehicle, and a four-wheeled vehicle. A power source of the vehicle MV may be selected from, for example, electricity and fuel. When the vehicle MV is an automobile, a size of the vehicle may be selected from large, mid-size, semi-mid-size, standard, special large, special small, and the like. When the vehicle MV is a motorcycle, the size of the vehicle MV may be selected from large, standard, and the like.

In one example, when the mobile object MB is a person MH, the information processing apparatus 1 may be any computer carried by the person MH. When the mobile object MB is an apparatus such as the vehicle MV, the flying object MD, or the robot apparatus MR, the information processing apparatus 1 may be an arbitrary computer deployed in the apparatus at least on a temporary basis. For example, when the mobile object MB is the vehicle MV, the information processing apparatus 1 may be an in-vehicle device that is mounted to the vehicle MV or a terminal device (such as a user terminal) that is temporarily deployed in the vehicle MV when the user uses the vehicle MV. The information processing apparatus 1 may be a computer that constitutes at least a part of the mobile object MB or a computer to be connected to the mobile object MB. In addition, the information processing apparatus 1 may be deployed outside of the mobile object MB and configured to control operations of the mobile object MB.

### [Method of weighting]

A method of weighting by the measurement precision 25 need only be configured so that the higher the measurement precision 25, the greater the weighting of a corresponding determination result 40, and the lower the measurement precision 25, the smaller the weighting of the corresponding determination result 40. As long as such a configuration is adopted, the method of weighting by the measurement precision 25 need not be particularly limited and may be defined as appropriate in accordance with the embodiment. A value of the measurement precision 25 may be used as a weight as it is. A value calculated by any operation from the measurement precision 25 may be used as a weight.

A method of measuring the measurement precision 25 need not be particularly limited and may be selected as appropriate in accordance with the embodiment such as a type of the positioning module 16. A known method may be adopted as the method of measuring the measurement precision 25. In one example, the acquired measurement precision 25 may include a dilution of precision (DOP) value. Hereinafter, the dilution of precision value may also be referred to as a "DOP value". The DOP value may indicate a degree of deterioration of positioning precision in a satellite positioning system. Accordingly, the positioning module 16 may be constituted of a satellite positioning module such as a GPS sensor or a GNSS sensor. The satellite positioning module may be configured as appropriate so as to measure a position using a satellite positioning system.

The DOP value may be measured by a known method. For example, the DOP value may be determined according to a positional relationship with a satellite. Since a position of the satellite can be specified from time, the DOP value may be specified according to a positioning position and a positioning time. For example, the DOP value may include a value such as a geometric dilution of precision (GDOP), a position dilution of precision (PDOP), a horizontal dilution of precision (HDOP), or a vertical dilution of precision (VDOP). In one example, the DOP value may be included in output information of the positioning module 16 (satellite positioning module). The information processing apparatus 1 may acquire both the current position 20 and the measurement precision 25 from the positioning module 16.

According to the DOP value, the measurement precision (measurement precision 25) of a position can be properly evaluated. Therefore, according to an example of the present embodiment, using the DOP value enables the measurement precision 25 of a position to be accurately reflected in the determination result 50. Accordingly, an improvement in determination precision of a geofence can be expected.

A method of reflecting the DOP value in weight need only be configured such that the higher a degree of deterioration indicated by the DOP value (in other words, the lower the measurement precision), the smaller the weight to be imparted on the corresponding determination result 40, and the lower a degree of deterioration, the greater the weight to be imparted on the corresponding determination result 40. As long as such a configuration is adopted, the method of weighting by the DOP value need not be particularly limited and may be defined as appropriate in accordance with the embodiment.

In one example, a reciprocal of the DOP value may be used as an indicator of weighting. In other words, weighting the determination result 40 with the measurement precision 25 may include determining a weight according to the reciprocal of the DOP value. The reciprocal of the DOP value may be used as a weight as it is. A value calculated by any operation from the reciprocal of the DOP value may be used as a weight.

In one example in Fig. 1, a situation is envisioned where a determination of a geofence is attempted four times, a determination result of "inside" is obtained by two attempts (first and fourth attempts), and a determination result of "outside" is obtained by the remaining two attempts. In addition, a situation is envisioned where, in the two attempts by which the determination result of "inside" was obtained, the DOP values are "12" and "6", and in the two attempts by which the determination result of "outside" was obtained, the DOP values are "20" and "30". Furthermore, a situation where the threshold 45 is "0.2" is envisioned. When the reciprocals of DOP values are used as weights as they are, a sum of weights of the determination results of "inside" after four determination attempts is "1/12 + 1/6 = 1/4". On the other hand, a sum of weights of the determination results of "outside" is "1/20 + 1/30 = 1/12". Therefore, in the example in Fig. 1, after four determination attempts, the sum of weights imparted on the determination result of "inside" exceeds the threshold 45. Accordingly, the determination result 50 that ascertains that the current position 20 is inside the geofence can be obtained.

A smaller DOP value indicates a higher measurement precision 25 of a position. A higher DOP value indicates a lower measurement precision 25. Therefore, according to one example of the present embodiment, using the reciprocal of the DOP value as an indicator enables the measurement precision 25 of a position to be accurately reflected in the determination result 50. Accordingly, an improvement in determination precision of a geofence can be expected.

### (Sum of weights exceeding threshold)

The sum of weights imparted on the object determination result 40 exceeding the threshold 45 corresponds to a state where, based on the quality of the measurement precision 25 of the position and the number of times a same determination result has been obtained, a certainty of the object determination result 40 exceeds a certain level. In consideration thereof, in the present embodiment, the information processing apparatus 1 ascertains a determination result 50 of the object geofence with whichever determination result that exceeds the threshold 45 in terms of the sum of weights.

In one example, determining whether or not the sum of weights has exceeded the threshold 45 may be constituted of the following calculation method. Specifically, as a first calculation method, as in the one example in Fig. 1, the weight by the measurement precision 25 may be defined such that the larger the value, the higher the certainty (the higher the measurement precision). By calculating the sum of imparted weights for each of the determination results of "inside" and "outside", the information processing apparatus 1 may calculate a sum of weights of each determination result. In addition, the information processing apparatus 1 may determine whether or not the calculated sum of weights is larger than a threshold. In this example, the sum of weights being larger than the threshold corresponds to the sum of weights exceeding the threshold 45.

However, the calculation method of determining whether or not the sum of weights has exceeded the threshold 45 in order to evaluate whether or not the certainty of the object determination result 40 has exceeded a certain level can be modified in any way according to how the weights are defined, how operators are given, and the like. For example, in a second calculation method, the weight by the measurement precision 25 may be given by a negative value and may be defined such that the smaller the value (the larger the absolute value), the higher the certainty. In this case, the smaller the sum of weights, the higher the certainty of a corresponding determination result. Therefore, the information processing apparatus 1 may determine whether or not the calculated sum of weights is smaller than a threshold (in other words, whether or not the absolute value of the sum of weights is larger than the threshold). In this example, the sum of weights being smaller than the threshold corresponds to the sum of weights exceeding the threshold 45.

In addition, for example, in a third calculation method, an initial value of an indicator value may be given for each determination result of "inside" and "outside" and the weight by the measurement precision 25 may be defined such that the larger the value, the higher the certainty. Calculating a sum of weights may be constituted of subtracting weights from the indicator value. In this case, since the more determinations with high measurement precision are repeated, the larger the weights to be repeatedly subtracted, the indicator value of the corresponding determination result decreases. Therefore, the information processing apparatus 1 may determine whether or not the calculated indicator value is smaller than a threshold. In this example, the indicator value being smaller than the threshold corresponds to the sum of weights exceeding the threshold 45.

As described above, determining whether or not the sum of weights has exceeded the threshold 45 is not limited to a simple addition and a determination of whether or not a sum exceeds a threshold as in the first calculation method and can be configured using various other operators. Therefore, determining whether or not the sum of weights has exceeded the threshold 45 may include not only the first calculation method described above but also all calculation methods capable of evaluating whether or not the certainty of the object determination result 40 has exceeded a certain level in a similar manner to the first calculation method described above such as the second calculation method and the third calculation method described above. Determining whether or not the sum of weights has exceeded the threshold 45 may include calculations that are apparently different from character representations such as subtraction, determination of being less than the threshold, and the like as in the second calculation method and the third calculation method described above.

### [Threshold]

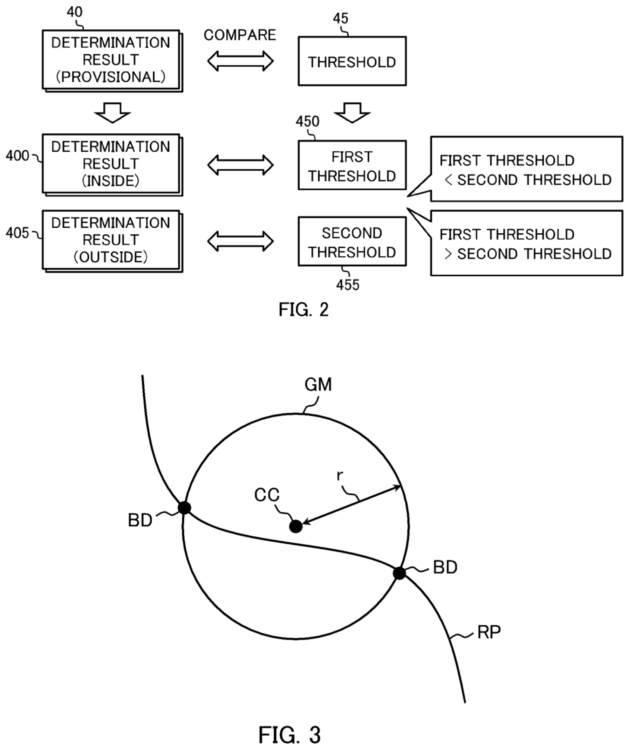

Fig. 2 schematically illustrates an example of a situation in which the determination result 40 and the threshold 45 according to the present embodiment are compared. The threshold 45 is a criterion for ascertaining the determination result (determination result 50) of a geofence with a determination result of "inside" or "outside". The threshold 45 may be arbitrarily specified. The threshold 45 may include a first threshold 450 for ascertaining the determination result that the current position 20 is inside the object geofence and a second threshold 455 for ascertaining the determination result that the current position 20 is outside the object geofence. The first threshold 450 is compared with the sum of weights of the determination result 400 of "inside". The second threshold 455 is compared with the sum of weights of the determination result 405 of "outside". The first threshold 450 and the second threshold 455 may be the same or may differ from each other.

In one example, the first threshold 450 may be set smaller than the second threshold 455. According to one example of the present embodiment, setting the first threshold 450 smaller than the second threshold 455 makes it easier to ascertain the determination result that the current position 20 is inside the object geofence. Accordingly, determining that the current position 20 is inside the object geofence can be prioritized. In another example, the second threshold 455 may be set smaller than the first threshold 450. According to one example of the present embodiment, setting the second threshold 455 smaller than the first threshold 450 enables determining that the current position 20 is outside the object geofence to be prioritized.

Note that the threshold 45 (first threshold 450 and second threshold 455) being large corresponds to requiring a high degree of certainty in order to ascertain the determination result. A correspondence relationship between the threshold 45 and an actual value may be determined as appropriate in accordance with the embodiment such as the calculation method for determining whether or not a sum of weights exceeds the threshold 45. In one example, the actual value used as the threshold 45 being large may correspond to the threshold 45 being large as it is. In another example, the actual value used as the threshold 45 being small may correspond to the threshold 45 being large.

### [Geofence]

A geofence is an area enclosed by a virtual boundary set on a map. Any action can be executed in response to a detection of an event with respect to the area such as entry to the area. Therefore, in one example, a geofence may be defined by a geometry that demarcates the area (geographical range) and an action related to the area.

### (Geometry)

A method of defining a geometry need not be particularly limited and may be selected as appropriate in accordance with the embodiment. A known method may be adopted as the method of defining a geometry. Information on a geometry may include any information for demarcating an area (geographical range).

Figs. 3, 4, and 5 schematically illustrate an example of a method of defining a geometry GM (area) of a geofence according to the present embodiment. In one example, as illustrated in Fig. 3, the geometry GM may be defined by a center coordinate CC and a radius r. In this case, an area of the geofence may be demarcated as a circular range with a radius of r from the center coordinate CC. A circumference of the circle with the radius r centered on the center coordinate CC is the boundary of the area of the geofence. When a passage RP is given, a boundary of the geofence on the passage RP is an intersection BD of the boundary of the geofence and the passage RP. Note that the passage RP may be given by any method. For example, the passage RP may be a road, a sea route, or an air route. The passage RP may be given realistically in a real space or given virtually. The passage RP may be omitted.

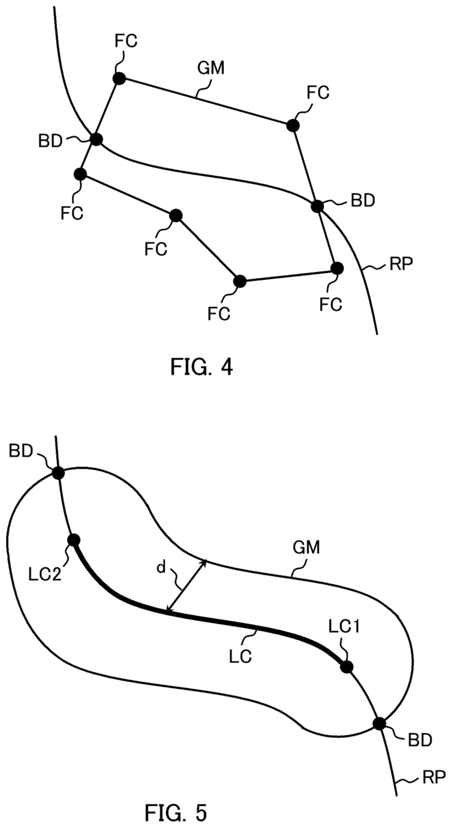

In one example, as illustrated in Fig. 4, the geometry GM may be defined by a sequence of coordinates of feature points FC. In this case, an area of the geofence may be demarcated as a range of a closed polygon formed by connecting adjacent feature points FC to each other. A line connecting each feature point FC is the boundary of the area of the geofence. The passage RP and the boundary (intersection BD) are similar to the example in Fig. 3. Note that six feature points FC are specified in the one example in Fig. 4. However, the number of feature points FC need not be limited to such an example and may be selected as appropriate in accordance with the embodiment. The number of feature points FC may be any number equal to three or more.

In one example, as illustrated in Fig. 5, the geometry GM may be defined by a link LC and a distance d from the link LC. In this case, an area of the geofence may be demarcated as a range with a capsule shape at the distance d from the link LC. An outer periphery of the capsule shape at the distance d from the link LC is the boundary of the area of the geofence. The passage RP and the boundary (intersection BD) are similar to the example in Fig. 3. Note that the link LC may be specified as appropriate. The link LC may be given as the passage RP such as a road link or given independently of the passage RP. Information on the link LC may be configured as appropriate. For example, the information on the link LC may include identification information such as a link ID. Range information indicating a range of the link LC may be held in any storage area in association with the identification information. Accordingly, the information on the link LC may be configured to indirectly indicate the range of the link LC. In addition, for example, the information on the link LC may be configured to directly indicate the range of the link LC by including the range information described above. For example, the range of the link LC may be specified by end points (LC1, LC2). Each of the end points (LC1, LC2) may be referred to as a start point or an end point. According to the example of the geometry GM, increasing a width of the link LC by the distance d makes the determination processing of the geofence (detection of an event with respect to the area) easier as compared to when the geofence is solely constituted of the link LC.

### (Integration of geometry)

An area of a geofence may be demarcated by one geometry or demarcated by a plurality of geometries. When an area is to be demarcated by a plurality of geometries, the plurality of geometries may be integrated (combined) as appropriate. A method of integrating geometries need not be particularly limited and may be selected as appropriate in accordance with the embodiment. In one example, integration of geometries may be defined by a logical operator such as a logical disjunction, a logical conjunction, and an exclusive disjunction.

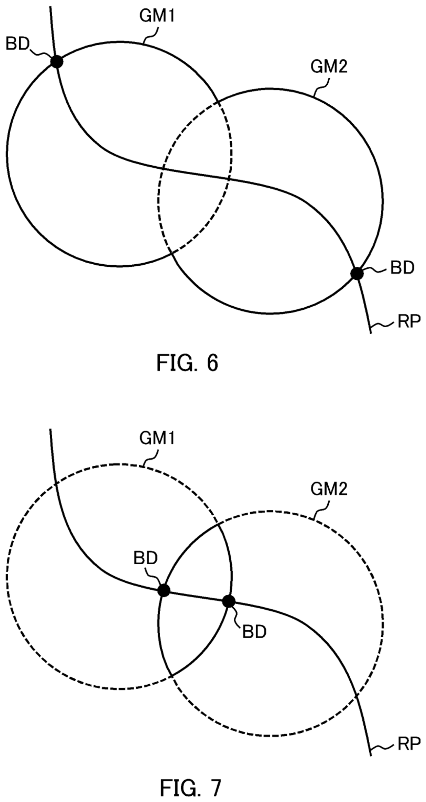

Fig. 6 schematically illustrates an example (logical disjunction) of a method of integrating geometries (GM1 and GM2) according to the present embodiment. In Fig. 6, a situation is envisioned where a logical disjunction is adopted as a logical operator used to integrate the two geometries (GM1 and GM2). In this case, an area of a geofence is demarcated as an area including at least one of the geometry GM1 and the geometry GM2. When the current position (current position 20) belongs to the area of at least one of the geometry GM1 and the geometry GM2, the current position (current position 20) is determined to be inside the geofence. When the current position does not belong to the areas of both the geometry GM1 and the geometry GM2, the current position is determined to be outside the geofence. When a passage RP is given as illustrated in Fig. 6, a boundary of the geofence on the passage RP is the two intersections BD of an outer periphery (boundary) after combining the respective geometries (GM1 and GM2) and the passage RP.

Fig. 7 schematically illustrates an example (logical conjunction) of a method of integrating geometries (GM1 and GM2) according to the present embodiment. In Fig. 7, a situation is envisioned where a logical conjunction is adopted as a logical operator used to integrate the two geometries (GM1 and GM2). In this case, an area of a geofence is demarcated as an area where the geometry GM1 and the geometry GM2 overlap with each other. When the current position belongs to the areas of both the geometry GM1 and the geometry GM2, the current position is determined to be inside the geofence. When the current position belongs to the area of only one of the geometry GM1 and the geometry GM2 or does not belong to the areas of both the geometry GM1 and the geometry GM2, the current position is determined to be outside the geofence. When a passage RP is given as illustrated in Fig. 7, a boundary of the geofence on the passage RP is the two intersections BD of an outer periphery of an overlapping range of the two geometries (GM1 and GM2) and the passage RP.

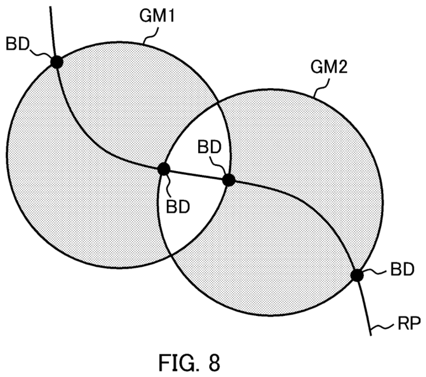

Fig. 8 schematically illustrates an example (exclusive disjunction) of a method of integrating geometries (GM1 and GM2) according to the present embodiment. In Fig. 8, a situation is envisioned where an exclusive disjunction is adopted as a logical operator used to integrate the two geometries (GM1 and GM2). In this case, an area of a geofence is demarcated as the area of only one of the geometry GM1 and the geometry GM2. When the current position belongs to the area of only one of the geometry GM1 and the geometry GM2, the current position is determined to be inside the geofence. When the current position belongs to the area where the geometry GM1 and the geometry GM2 overlap with each other or does not belong to any area, the current position is determined to be outside the geofence. When a passage RP is given as illustrated in Fig. 8, a boundary of the geofence on the passage RP is the two intersections BD of the boundaries of the respective geometries (GM1 and GM2) and the passage RP and the two intersections BD of an outer periphery of an overlapping range of the two geometries (GM1 and GM2) and the passage RP.

### (Action)

A method of defining an action need not be particularly limited and may be selected as appropriate in accordance with the embodiment. A known method may be adopted as the method of defining an action. In one example, an action may be defined by an execution content (action content) and an execution condition (action execution condition). In other words, an action may be defined to give "when" (execution condition) and "what" (execution content) to be executed with respect to the geographic range (geometry) being set.

### (A) Action content

An action content may be determined as appropriate in accordance with the embodiment such as a situation, an object, and the like of using a geofence. The action content may include, for example, controlling an operation of an apparatus, generating information, and outputting information. The apparatus to be controlled may be the information processing apparatus 1 itself or any apparatus (the mobile object MB, another computer, or the like) connected to the information processing apparatus 1. Controlling an operation of the apparatus may include, for example, operating the apparatus in a specific mode among a plurality of modes, causing the apparatus to execute a predetermined operation, allowing the apparatus to execute a predetermined operation, and prohibiting the apparatus from executing a predetermined operation. Generating information may include, for example, generating information to be notified to an external computer. Outputting information may include, for example, presenting information to a user and transmitting information to an external computer. When the information processing apparatus 1 is deployed inside or outside the mobile object MB, the action content may include any action content related to the mobile object MB.

For example, when the mobile object MB is the vehicle MV, a geofence may be provided in a low-emission zone. The vehicle MV may be a hybrid vehicle. In this case, when the vehicle MV enters the geofence and an operating mode of the vehicle MV is a hybrid mode, the action content may include switching the operating mode of the vehicle MV from the hybrid mode to an EV (electric vehicle) mode. In addition, for example, when at least one of the vehicle MV and the information processing apparatus 1 is provided with an imaging apparatus, the action content may include prohibiting imaging by the imaging apparatus. Furthermore, for example, the action content may include notifying an external computer (server or the like) of a movement status of the vehicle MV. The movement status of the vehicle MV may include, for example, approaching a destination, having reached the destination, staying at the destination, and having departed the destination. In one example, the vehicle MV may be a truck delivering a package and the destination may be a delivery destination of the package (such as a store). In addition, for example, the action content may include outputting an advertisement to at least one of an output device of the information processing apparatus 1 (output device 15 in Fig. 10) and an external output apparatus. For example, the external output apparatus may be an output apparatus (display, speaker, or the like) deployed in the vehicle MV separately from the information processing apparatus 1. The advertisement may include information on a coupon for discounts at eligible stores.

Note that the number of executions of actions specified in the action content may be one or a plurality. When a plurality of actions are defined in the action content, each action may be referred to as a sub-action. The action content may be defined by a combination of a plurality of sub-actions. When the action content is defined by a combination of a plurality of sub-actions, an order of priority of execution may be set to each sub-action. In addition, a dependence relationship of executions may exist between at least a part of the sub-actions such as when whether or not a second sub-action is to be executed or an execution content of the second sub-action is to be determined according to an execution result of a first sub-action.

In addition, the action content may be determined statically in advance or determined dynamically according to predetermined conditions. A dynamic determination of the action content may be performed, for example, based on various conditions such as a time slot, a date, weather, the presence or absence of an event, a state of the user, and a state of an apparatus (information processing apparatus 1, mobile object MB, vehicle MV, or the like). As one example, the action content may be defined so that advertisements are output according to time slots (such as outputting an advertisement of a cafe during a morning time slot and outputting an advertisement of a restaurant during a night time slot).

### (B) Action execution condition

An action execution condition is a condition for determining whether or not to execute an action. The action execution condition may be defined as appropriate so as to include a condition related to an event with respect to an object geofence. An event with respect to a geofence may be detected as appropriate according to a result (determination result 50) of an inside/outside determination of the geofence. In one simple example, a condition related to an event with respect to a geofence may include at least one of being positioned inside the geofence and being positioned outside the geofence. A transition of a positional relationship with respect to the geofence may be monitored by continuously executing inside/outside determinations of the geofence. Accordingly, in one example, a condition related to an event with respect to the geofence may be detected according to a result of monitoring the transition of the positional relationship with respect to the geofence. For example, an event with respect to the geofence may include at least one of staying outside the geofence, entering the geofence from outside, staying inside the geofence, and exiting the geofence to the outside. Staying inside (outside) the geofence may include at least one of staying inside (outside) the geofence beyond a predetermined time and performing a predetermined movement inside (outside) the geofence.

The action execution condition may further include any condition other than the condition related to an event with respect to the geofence. In one example, the action execution condition may further include a condition related to an execution environment of an action. The execution environment may include any element of the circumstances under which the action is to be executed. For example, the execution environment may include dynamic elements such as a time slot, a date, weather, and the presence or absence of any event. In addition, in one example, the action execution condition may further include at least one of a condition related to a state of an apparatus and a condition related to a state of a user of the apparatus. The apparatus may be the information processing apparatus 1 itself or any apparatus connected to the information processing apparatus 1. The apparatus may be the mobile object MB. When determining whether or not any of the conditions is satisfied, the information processing apparatus 1 may acquire information used for the determination as appropriate from any information source. For example, when the action execution condition includes a condition related to the state of an apparatus, the information processing apparatus 1 may determine whether or not the condition related to the state of an apparatus is satisfied according to at least one of information held in the information processing apparatus 1 or information acquired from another apparatus connected to the information processing apparatus 1. The other apparatus may include a computer connected via a network such as an external server. The other apparatus may include various sensors such as an in-vehicle sensor. A similar description applies when the action execution condition includes a condition related to the state of a user.

As an example, in the case described above where the information processing apparatus 1 is deployed in a vehicle MV, the action execution condition may further include a condition related to a state of the vehicle MV and the information processing apparatus 1 may determine whether or not the condition related to the state of the vehicle MV is satisfied according to vehicle information obtained from the vehicle MV. For example, with respect to a geofence related to a low-emission zone, the condition related to the state of the vehicle MV may include the vehicle MV being in a hybrid mode. Accordingly, when the vehicle MV is in an EV mode even before entering the geofence, the information processing apparatus 1 may determine that the action execution condition is not satisfied and may omit execution of an action to switch the operating mode of the vehicle MV to the EV mode. In addition, for example, the condition related to the state of a vehicle MV (including the information processing apparatus 1) may include the imaging apparatus being started up. Accordingly, when the imaging apparatus has been stopped even before entering the geofence, the information processing apparatus 1 may determine that the action execution condition is not satisfied and may omit execution of an action to prohibit imaging by the imaging apparatus. Furthermore, for example, the condition related to the state of a vehicle MV (including the information processing apparatus 1) may include an utterance by an application other than an application of an action to be executed not being executed. Accordingly, when an utterance by the other application is being executed, the information processing apparatus 1 may determine that the action execution condition is not satisfied and may omit execution of the action. In response to the termination of the utterance by the other application, the information processing apparatus 1 may determine that the action execution condition is satisfied and may execute the action defined in the action content.

Note that once the action execution condition is satisfied, the action defined in the action content may be executed at any timing. In one example, the action may be executed immediately upon fulfillment of the action execution condition or may be executed after a predetermined delay time has elapsed. In addition, the number of the action to be executed in response to the fulfillment of the action execution condition need not be particularly limited and may be determined as appropriate in accordance with the embodiment. In one example, the action may be executed only once or may be repeatedly executed under predetermined conditions.

One or more conditions may be defined in the action execution condition. The action execution condition may be constituted of a combination of a plurality of conditions. When the action execution condition is constituted of a combination of a plurality of conditions, the action execution condition may be determined to be satisfied upon the fulfillment of any condition included in the action execution condition. In one example, the action execution condition may be determined to be satisfied upon the fulfillment of any condition or the fulfillment of all of at least two or more conditions. An order of priority may be set to each condition. The order of priority may be set statically or set dynamically according to the execution environment or the like. In this case, determination processing of each condition may be executed according to the order of priority. The action execution condition may be referred to as a trigger event.

### (Map)

A map (map data) can be given as appropriate. The map data may be configured as appropriate to show a map. A known configuration may be adopted as a configuration of the map data. In one example, the map data may be configured to include coordinate information of latitude and longitude, road network information, facility information, and the like. Road network information may include an ID (road link ID) of each road (road link). The map data may be held in any storage area. The map data may be stored in at least one of a memory resource of the information processing apparatus 1 and an external main memory. The external main memory may include a main memory of an external computer such as a network attached storage (NAS).

In the information processing apparatus 1, the map data may be used for any purpose such as displaying a designated area or a designated location or route guidance. When the map data is not held in advance and the map data is to be used for any purpose, the information processing apparatus 1 may acquire at least data of a range to be used in the map data as appropriate from the external main memory. A known method may be adopted as the method of acquiring the map data. In the information processing apparatus 1, determination processing of a geofence may be executed in conjunction with processing of using the map data or may be executed independently of the processing of using the map data.

### [Geofence definition data]

As long as the geofence definition data 30 is configured so as to define a geofence (geometry and action), a configuration thereof need not be particularly limited and may be determined as appropriate in accordance with the embodiment. In one example, the geofence definition data 30 may be configured to include both information on a geometry and information on an action.

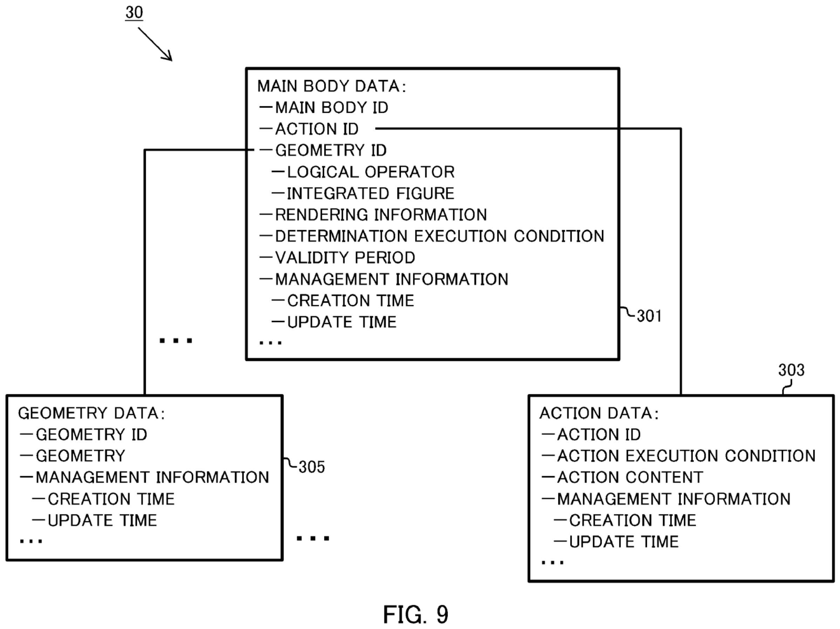

Fig. 9 schematically illustrates an example of a configuration of the geofence definition data 30 according to the present embodiment. In one example, the geofence definition data 30 may include action data 303 that specifies an action in a geofence and main body data 301 that includes identification information (action ID) of the action data 303. Due to the main body data 301 including the identification information of the action data 303, the action data 303 is associated with the main body data 301. As the number of geofences increases, a data volume of the geofence definition data 30 may grow. In contrast, in one example of the present embodiment, the geofence definition data 30 is divided into the main body data 301 and the action data 303. In other words, the action data 303 is separated from the main body data 301. Accordingly, the action data 303 is configured to be reusable. In other words, by associating the action data 303 with another piece of main body data, a same action specified by the action data 303 can also be set for another geofence. Therefore, according to one example of the present embodiment, since duplication of data with respect to the definition of a same action can be suppressed, a reduction in data volume with respect to the geofence definition data 30 can be achieved. The reduction in data volume can be facilitated by increasing a reutilization rate.

In addition, in one example, the geofence definition data 30 may further include geometry data 305 that specifies a geometry that demarcates an area of a geofence. The main body data 301 may further include identification information (geometry ID) of the geometry data 305. Due to the main body data 301 including the identification information of the geometry data 305, the geometry data 305 is associated with the main body data 301. In one example of the present embodiment, the geometry data 305 is also separated from the main body data 301 in a similar manner to the action data 303. Accordingly, the geometry data 305 is also configured to be reusable. In other words, by associating the geometry data 305 with another piece of main body data, a same area definition (geometry) specified by the geometry data 305 can also be applied to another geofence. Therefore, according to one example of the present embodiment, when setting a plurality of geofences to a same area, duplication of data with respect to the same area definition can be suppressed. Consequently, a reduction in data volume with respect to the geofence definition data 30 can be achieved.

### (Main body data)

The main body data 301 may be configured as appropriate so as to indicate a geofence. In one example, by including the identification information (action ID and geometry ID) of the action data 303 and the geometry data 305, the main body data 301 may be configured to indicate a definition of the geofence together with the associated action data 303 and the associated geometry data 305. As illustrated in Fig. 9, in one example of the present embodiment, the main body data 301 may include fields for storing various kinds of information such as a main body ID, an action ID, a geometry ID, rendering information, a determination execution condition, a validity period, and management information. An order of the respective fields need not be particularly limited and may be modified as appropriate in accordance with the embodiment. In one example, one piece of main body data 301 may correspond to one geofence.

The main body ID may be used to identify a geofence. The main body ID is an example of identification information of the main body data 301. A data format of the identification information (main body ID) need not be particularly limited and may be determined as appropriate in accordance with the embodiment. A value of the main body ID may be given according to the time at which the geofence was registered by creation of the main body data 301. The time may include a year, a month, and a day. An object unit of the time may be selected arbitrarily. Accordingly, the main body ID may be configured so that a registration order can be determined based on the value of the main body ID.

The action ID is used to identify an action (action data 303) to be applied to the geofence. The action ID is an example of identification information of the action data 303. A data format of the identification information (action ID) of the action need not be particularly limited and may be determined as appropriate in accordance with the embodiment. As illustrated in Fig. 9, in one example of the present embodiment, due to the main body data 301 including an action ID, the action data 303 identified by the action ID may be linked with the main body data 301.

The geometry ID is used to identify a geometry (geometry data 305) to be applied to the geofence. The geometry ID is an example of identification information of the geometry data 305. A data format of the identification information (geometry ID) of the geometry need not be particularly limited and may be determined as appropriate in accordance with the embodiment. As illustrated in Fig. 9, in one example of the present embodiment, due to the main body data 301 including a geometry ID, the geometry data 305 identified by the geometry ID may be linked with the main body data 301.

Here, as described above, in one example, an area of a geofence may be demarcated by one geometry or demarcated by a plurality of geometries (Figs. 6 to 8). Accordingly, including the identification information of the geometry data 305 may be constituted of including the identification information of the geometry data 305 of each of one or more geometries. When including the identification information of the geometry data 305 of each of a plurality of geometries, the main body data 301 may further include a logical operator to be used to integrate the plurality of geometries.

In the example in Fig. 9, one or more geometry IDs may be stored in the geometry ID field of the main body data 301. Accordingly, one or more pieces of geometry data 305 may be linked with the main body data 301. With the main body data 301 including a plurality of geometry IDs, a plurality of geometries may be linked with the main body data 301 and used to demarcate an area of the geofence to be defined. In addition, the main body data 301 may further include a field for storing a logical operator. When the main body data 301 includes a plurality of geometry IDs, the field may store the logical operator used when integrating the geometries corresponding to the respective geometry IDs. Accordingly, the main body data 301 may include a logical operator used when integrating the respective linked geometries.

According to an example of the present embodiment, an area of a geofence can be demarcated using a plurality of pieces of geometry data 305 (plurality of geometries). Accordingly, since reusability of the geometry data 305 can be further improved, a further reduction in data volume can be expected. Furthermore, in addition to simple area definitions according to a single geometry, complex area definitions can be easily generated by a combination of a plurality of geometries.

In one example, as illustrated in Fig. 9, when the integration of a plurality of geometries is allowed, the main body data 301 may further include a field for storing an integrated figure that is formed by integrating the plurality of geometries by a logical operator. Accordingly, when including the geometry ID of the geometry data 305 of each of the plurality of geometries, the main body data 301 may further include an integrated figure that is formed by integrating the plurality of geometries. The integrated figure may be used for any purpose such as distance calculation. According to one example of the present embodiment, with the main body data 301 including an integrated figure, a calculation to integrate geometries each time a geofence is used need no longer be executed. As a result, an improvement in efficiency of processing can be expected.

The rendering information is used to render a geofence on a map. In one example of the present embodiment, with the main body data 301 including a field for storing the rendering information, the main body data 301 may further include rendering information for rendering a geofence on a map in the information processing apparatus 1. As described above, in the information processing apparatus 1, a map may be used for any purpose such as displaying a designated area or a designated location or route guidance. Map data may be used to render a map. The rendering information may include any information to be used to render a geofence on a map. For example, the rendering information may include information such as a representative point (coordinates or the like), a name, and rendering attributes. The rendering attributes may include whether or not to display a geofence, a fill color, a border color, transparency, icon attributes, and the like. The icon attributes may include whether or not to display an icon, content information (storage destination of icon image or the like), and the like. The representative point may be used as a point where an icon is to be displayed. According to one example of the present embodiment, compared to the geometry data 305 that specifies a geometry being separated from the main body data 301, the rendering information is retained in the main body data 301. Accordingly, in the information processing apparatus 1, even without referring to the geometry data 305, a geofence can be rendered by referring to the rendering information in the main body data 301. As a result, an improvement in efficiently of processing for rendering a geofence can be expected.

The determination execution condition is used to select whether or not to execute determination processing of a geofence. In one example of the present embodiment, with the main body data 301 including a field for storing the determination execution condition, the main body data 301 may further include a determination execution condition for selecting whether or not to execute a determination of a geofence. While the action execution condition described above specifies whether or not to execute an action according to a result of an inside/outside determination of a geofence or the like after executing the inside/outside determination, the determination execution condition specifies whether or not to execute the inside/outside determination of the geofence in the first place. According to one example of the present embodiment, even without referring to the action data 303 (and geometry data 305), whether or not to execute determination of a geofence can be determined by referring to the determination execution condition in the main body data 301. As a result, an improvement in efficiency of determination processing of a geofence can be expected.

Note that the determination execution condition need not be particularly limited and may be set as appropriate in accordance with the embodiment. The determination execution condition may be set with respect to static information or may be set with respect to dynamic information such as the execution environment described earlier. For example, the static information may include a type of the mobile object MB (such as a vehicle type) and an attribute of a user. For example, the attribute of a user may include an age, gender, and the like of the user. In one example, in the case described above where the information processing apparatus 1 is deployed in a vehicle MV, the determination execution condition may specify whether or not to execute an inside/outside determination of a geofence according to vehicle information obtained from the vehicle MV. In addition, in one example, the determination execution condition may include a hysteresis condition that specifies that after executing the inside/outside determination, a dead zone (hysteresis) of a predetermined distance is set and processing of the inside/outside determination is not performed once again until a movement over the distance is performed. With the determination execution condition including the hysteresis condition, frequent execution of determination processing near a boundary of the geofence can be suppressed.

The validity period indicates a time limit for which the geofence defined by the geofence definition data 30 is valid. In one example of the present embodiment, with the main body data 301 including a field for storing the validity period, the main body data 301 may further include a validity period of a geofence. According to one example of the present embodiment, a period during which a geofence is to be applied can be designated by the validity period included in the main body data 301. In addition, even without referring to the action data 303 and the geometry data 305, whether or not the geofence is valid can be determined by referring to the validity period in the main body data 301. As a result, an improvement in efficiency of processing of verifying a validity of a geofence can be expected.

The management information may include any information to be used in the operation of the main body data 301. In one example, the management information may include a creation time, an update time, and the like. The times may include a year, a month, and a day. An object unit of the time may be selected arbitrarily. The creation time may indicate the time at which the main body data 301 was created. The update time may indicate the time at which the geofence definition data 30 was updated. In one example, the update time may be configured to indicate the time at which at least one of the main body data 301, the associated action data 303, and the associated geometry data 305 was updated. Accordingly, in one example of the present embodiment, the main body data 301 may further include an overall update time that indicates the time at which at least one of the main body data 301, the action data 303, and the geometry data 305 was updated. According to one example of the present embodiment, consolidating the update times in the main body data 301 enables whether or not at least one of the main body data 301, the action data 303, and the geometry data 305 has been updated to be determined simply by referring to the main body data 301 without referring to the action data 303 and the geometry data 305. As a result, an improvement in efficiency of processing when determining the presence or absence of an update of the geofence definition data 30 can be expected. However, the update times included in the main body data 301 need not be limited to such an example and may be modified as appropriate in accordance with the embodiment. In another example, the update time may be configured to indicate the time at which the main body data 301 was updated without indicating the times at which the action data 303 and the geometry data 305 were updated. In yet another example, the main body data 301 may separately include an overall update time and an individual update time of the main body data 301.

With respect to the specific configuration of the main body data 301, components can be omitted, replaced, or added as appropriate in accordance with the embodiment. For example, at least one of the logical operator, the integrated figure, the rendering information, the determination execution condition, the validity period, and the management information may be omitted. The rendering information, the determination execution condition, and the validity period may be held in at least one of the action data 303 and the geometry data 305. At least one of the creation time and the update time may be held separately from the management information. In the management information, at least one of the creation time and the update time may be omitted. The management information may further include information other than the creation time and the update time (for example, a creator, an updater, a deletion time, or a deleter). For example, the main body data 301 may further include other information such as a category of the action, whether or not to be made public, and a type of the information processing apparatus 1 that is an object to which geofence definition data is to be provided.

### (Action data)

By including definition information of an action, the action data 303 may be configured as appropriate to indicate the defined action. As illustrated in Fig. 9, in one example of the present embodiment, the action data 303 may include fields for storing various kinds of information such as an action ID, an action execution condition, an action content, and management information. An order of the respective fields need not be particularly limited and may be modified as appropriate in accordance with the embodiment. In one example, one piece of action data 303 may correspond to one action definition.

The action ID is used to identify the action data 303. The action execution condition specifies a condition under which an action is to be executed. The action content specifies a content of the action to be executed. The action execution condition and the action content may respectively be defined as described above. The action execution condition and the action content are examples of definition information of an action. The management information may include any information to be used in the operation of the action data 303. The management information of the action data 303 may be configured in a similar manner to the management information of the main body data 301 with the exception of the action data 303 replacing the main body data 301 as an object. In one example, the management information may include a creation time, an update time, and the like. The creation time may indicate the time at which the action data 303 was created. The update time may indicate the time at which the action data 303 was updated.

With respect to the specific configuration of the action data 303, components can be omitted, replaced, or added as appropriate in accordance with the embodiment. For example, the management information may be omitted. At least one of the creation time and the update time may be held separately from the management information. In the management information, at least one of the creation time and the update time may be omitted. The management information may further include information other than the creation time and the update time (for example, a creator, an updater, a deletion time, or a deleter). For example, the action data 303 may further include other information such as a category of the action and a name.

### (Geometry data)

By including definition information of a geometry (information that demarcates an area), the geometry data 305 may be configured as appropriate to indicate the defined geometry. As illustrated in Fig. 9, in one example of the present embodiment, the geometry data 305 may include fields for storing various kinds of information such as a geometry ID, a geometry (definition information), and management information. An order of the respective fields need not be particularly limited and may be modified as appropriate in accordance with the embodiment. In one example, one piece of geometry data 305 may correspond to one geometry definition.

The geometry ID is used to identify the geometry data 305. The geometry (definition information) demarcates an area of the geofence. In one example, the geometry may be defined by the method described above such as a circle (Fig. 3), a polygon (Fig. 4), or a link (Fig. 5). The management information may include any information to be used in the operation of the geometry data 305. The management information of the geometry data 305 may be configured in a similar manner to the management information of the main body data 301 with the exception of the object being replaced. In one example, the management information may include a creation time, an update time, and the like. The creation time may indicate the time at which the geometry data 305 was created. The update time may indicate the time at which the geometry data 305 was updated.

With respect to the specific configuration of the geometry data 305, components can be omitted, replaced, or added as appropriate in accordance with the embodiment. For example, the management information may be omitted. At least one of the creation time and the update time may be held separately from the management information. In the management information, at least one of the creation time and the update time may be omitted. The management information may further include information other than the creation time and the update time (for example, a creator, an updater, a deletion time, or a deleter). For example, the geometry data 305 may further include other information such as a category of the action and a name.

### (Example of reference procedure during inside/outside determination)

Each field of the geofence definition data 30 (main body data 301, action data 303, and geometry data 305) may be referenced as appropriate when executing determination processing of a geofence in the information processing apparatus 1.

As one example, in a first step, the information processing apparatus 1 may determine whether or not the determination execution condition of the main body data 301 is satisfied. In a second step, with respect to a geofence determined to satisfy the determination execution condition, the information processing apparatus 1 may reference the geometry ID (identification information) of the main body data 301 and access the geometry data 305 linked with the main body data 301. The information processing apparatus 1 may reference the geometry of the geometry data 305 and determine whether the current position 20 is inside or outside an area demarcated by the geometry. In one example of the present embodiment, this determination processing corresponds to an inside/outside determination of a geofence.

In one example, when a plurality of pieces of geometry data 305 are linked with the main body data 301, the information processing apparatus 1 may specify an area of a geofence by integrating the respective geometries of the plurality of pieces of geometry data 305 with a logical operator of the main body data 301. In addition, in one example, when information on the area demarcated after the integration of the plurality of geometries is stored in the main body data 301 as an integrated figure, the information processing apparatus 1 may omit accessing the geometry data 305 and the like. The information processing apparatus 1 may specify the area after integration by referencing the integrated figure of the main body data 301. In addition, the information processing apparatus 1 may determine whether the current position 20 is inside or outside the specified area.

Note that in the present embodiment, the information processing apparatus 1 may accumulate the weighted determination results 40 by repeatedly attempting the second step and performing weighting. When the sum of weights of the determination results of either inside or outside in the accumulated determination results 40 exceeds the threshold 45, the information processing apparatus 1 may ascertain a determination result 50 of the object geofence with whichever determination result having exceeded the threshold 45. In addition, when the determination processing of the geofence is executed continuously, the information processing apparatus 1 may further determine a transition state of the current position (current position 20) with respect to the object geofence according to previous and current ascertained determination results (determination results 50).

In a third step, the information processing apparatus 1 may reference the action ID (identification information) of the main body data 301 and access the action data 303 linked with the main body data 301. In addition, the information processing apparatus 1 may determine whether or not the action execution condition of the action data 303 is satisfied. In a fourth step, with respect to a geofence determined to satisfy the action execution condition, the information processing apparatus 1 may execute the action specified by the action content of the action data 303.

### (Acquisition route of geofence definition data)

The information processing apparatus 1 may acquire the geofence definition data 30 of each geofence as appropriate. In one example, the geofence definition data 30 may be incorporated in the memory resource of the information processing apparatus 1 in advance. In another example, the information processing apparatus 1 may acquire the geofence definition data 30 from an external main memory such as a server as appropriate. For example, the information processing apparatus 1 may collectively acquire pooled geofence definition data 30 from the external main memory. In addition, for example, the geofence definition data may be held by a database. A server may be configured to be capable of accessing the database. The database may be stored in a memory resource of the server or stored in an external main memory that can be accessed by the server. The information processing apparatus 1 may notify a current position to the server and request the server to provide the geofence definition data 30. The server may extract a geofence that exists within a predetermined distance from the current position. The predetermined distance may be arbitrarily specified. The server may provide the information processing apparatus 1 with the geofence definition data 30 of the extracted geofence. Accordingly, the information processing apparatus 1 may acquire the geofence definition data 30. In yet another example, the information processing apparatus 1 may directly access the database and acquire the geofence definition data 30 from the database.

### (Other)

Note that a data format of the geofence definition data 30 need not be particularly limited and may be selected as appropriate in accordance with the embodiment. In addition, a data structure of the geofence definition data 30 (main body data 301, action data 303, and geometry data 305) may be modified as appropriate in accordance with the embodiment.

For example, in one example in Fig. 9, the action data 303 and the geometry data 305 are separated from the main body data 301. However, the configuration of the geofence definition data 30 need not be limited to such an example. In another example, only one of the action data 303 and the geometry data 305 may be separated from the main body data 301 and the other may be included (incorporated) in the main body data 301. For example, only the action data 303 may be separated from the main body data 301 and the geometry data 305 may be included in the main body data 301. Only the geometry data 305 may be separated from the main body data 301 and the action data 303 may be included in the main body data 301. In yet another example, when reusability of actions and geometries is not ensured, both the action data 303 and the geometry data 305 may be included in the main body data 301.

### [2 Configuration example]

### [Hardware configuration example]

Fig. 10 schematically illustrates an example of a hardware configuration of the information processing apparatus 1 according to the present embodiment. In one example, the information processing apparatus 1 according to the present embodiment may be configured as a computer to which a controller 11, a storage 12, the external interface 13, an input device 14, an output device 15, and the positioning module 16 are electrically connected.

The controller 11 may include a CPU that is a hardware processor, a random access memory (RAM), and a read only memory (ROM) and is configured to execute information processing based on a program and various kinds of data. The controller 11 (CPU) is an example of a processor resource.

For example, the storage 12 may include a hard disk drive, a solid state drive, a semiconductor memory, and the like and is configured to hold any data. The storage 12, the RAM, and the ROM are examples of a memory resource of the information processing apparatus 1. In one example, the storage 12 may store various kinds of information such as a program 81 and the geofence definition data 30.

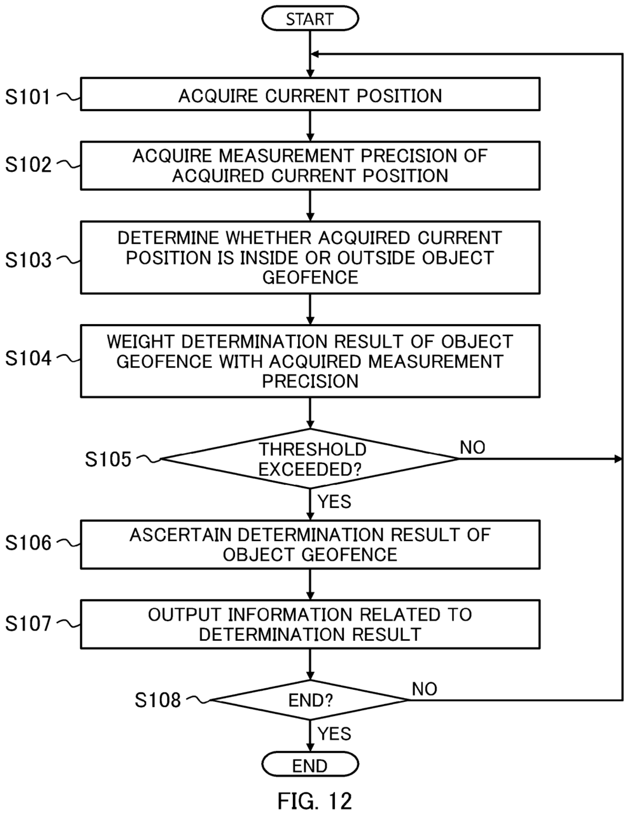

The program 81 is a program for causing the information processing apparatus 1 to execute information processing (Fig. 12 to be described later) related to the determination of a geofence. The program 81 includes a series of instructions of the information processing. The program 81 is an example of the program according to the present disclosure.

In one example, at least one of the program 81 and the geofence definition data 30 may be stored in a storage medium 91 instead of the storage 12 or together with the storage 12. The storage medium 91 is configured to accumulate various kinds of information (stored programs and the like) by an electrical action, a magnetic action, an optical action, a mechanical action, or a chemical action so that the information is readable by a machine such as a computer. The storage 12 and the storage medium 91 are examples of a non-transitory storage medium. The information processing apparatus 1 may acquire at least one of the program 81 and the geofence definition data 30 from the storage medium 91. The storage medium 91 may be a disk-type storage medium (CD, DVD, or the like) or a non-disk type storage medium that is a semiconductor memory (flash memory or the like). Any drive apparatus may be used to read information stored in the storage medium 91. A type of the drive apparatus may be selected according to the storage medium 91. The drive apparatus may be connected to the information processing apparatus 1 by any method (for example, via the external interface 13). The storage medium 91 may include an external main memory.

The external interface 13 is configured to connect to an external apparatus in a wired or wireless manner. For example, the external interface 13 may be a Universal Serial Bus (USB) port, a communication port (communication module), or a dedicated port. A type and the number of the external interface 13 may be determined as appropriate in accordance with the embodiment. A communication standard of the communication port (communication module) may be arbitrarily selected. For example, the communication standard may be selected as appropriate from the Internet, a wireless communication network, a mobile communication network, a telephone network, and a dedicated network. The dedicated network may include an in-vehicle network (controller area network). In one example, the information processing apparatus 1 may be connected to the mobile object MB (such as the vehicle MV) via the external interface 13.

The input device 14 is configured to accept input of information. The input device 14 may be constituted of, for example, a mouse, a keyboard, a touch panel, or an operator. The output device 15 is configured to output information. The output device 15 may be constituted of, for example, a display or a speaker. The user can operate the information processing apparatus 1 by using the input device 14 and the output device 15. The input device 14 and the output device 15 need not be directly connected to the information processing apparatus 1 and may be indirectly connected via the external interface 13. The input device 14 and the output device 15 may be integrally configured at least in part by a touch panel display or the like.

As described above, the positioning module 16 is configured to measure a position. A type of the positioning module 16 need not be particularly limited and may be selected as appropriate in accordance with the embodiment. The positioning module 16 need not be built into the information processing apparatus 1 and may be connected to the information processing apparatus 1 via the external interface 13.

With respect to a specific hardware configuration of the information processing apparatus 1, components can be omitted, replaced, or added as appropriate in accordance with the embodiment. For example, the controller 11 may include a plurality of hardware processors. The hardware processors may be constituted of a microprocessor, a field-programmable gate array (FPGA), a digital signal processor (DSP), an ECU, a graphics processing unit (GPU), an application specific integrated circuit (ASIC), and the like. At least one of the external interface 13, the input device 14, and the output device 15 may be omitted. At least one of the program 81 and the geofence definition data 30 may be saved in an external main memory such as a NAS. The external main memory is also an example of a non-transitory storage medium. The information processing apparatus 1 may be constituted of a plurality of computers. In this case, hardware configurations of the respective computers may or may not match each other. The information processing apparatus 1 may be a computer designed specifically for a service to be provided, as well as a general-purpose server apparatus, a general-purpose personal computer (PC), a notebook PC, a terminal apparatus, or the like. The terminal apparatus may include a user terminal such as a smartphone or a tablet terminal. In addition, in one example, when deployed in the vehicle MV, the information processing apparatus 1 may be an in-vehicle apparatus (in-vehicle device, terminal apparatus, or the like).

### [Software configuration]

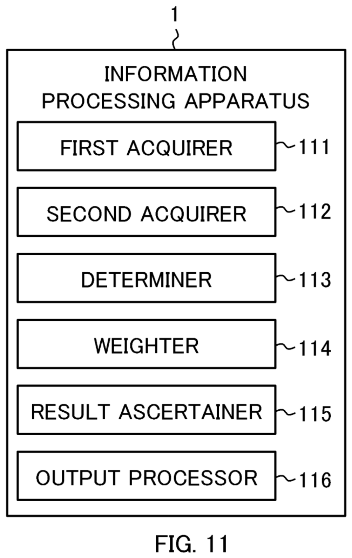

Fig. 11 schematically illustrates an example of a software configuration of the information processing apparatus 1 according to the present embodiment. The controller 11 of the information processing apparatus 1 executes instructions included in the program 81 stored in the storage 12 with the CPU. Accordingly, the information processing apparatus 1 operates as a computer including a first acquirer 111, a second acquirer 112, a determiner 113, a weighter 114, a result ascertainer 115, and an output processor 116 as software modules. In other words, in the present embodiment, each software module of the information processing apparatus 1 is realized by the controller 11 (CPU).

The first acquirer 111 is configured to acquire the current position 20 as measured by the positioning module 16. The second acquirer 112 is configured to acquire the measurement precision 25 of the acquired current position 20. The determiner 113 is configured to determine whether the acquired current position 20 is inside or outside an object geofence. The weighter 114 is configured to weight the determination result 40 of the object geofence with the acquired measurement precision 25. The result ascertainer 115 is configured to compare a sum of weights of each of the determination results of being inside and the determination results of being outside with the threshold 45. The acquisition of the current position 20 by the first acquirer 111, the acquisition of the measurement precision 25 by the second acquirer 112, the determination of whether the current position 20 is inside or outside the object geofence by the determiner 113, and the weighting of the determination result 40 with the measurement precision 25 by the weighter 114 are repeated until the sum of weights of the determination results of either inside or outside exceeds the threshold 45. Accordingly, the weighted determination results 40 are accumulated. The result ascertainer 115 is configured to ascertain, when the sum of weights of the determination results of either inside or outside in the accumulated determination results 40 exceeds the threshold 45, a determination result 50 of the object geofence with whichever determination result having exceeded the threshold 45. The output processor 116 is configured to output information 55 related to the ascertained determination result 50.

Note that in the present embodiment, an example where each software module of the information processing apparatus 1 is realized by a general-purpose CPU is described. However, a part of or all of the software modules described above may be realized by one or a plurality of dedicated processors or chip sets. Each of the modules described above may be realized as a hardware module. With respect to the software configuration of the information processing apparatus 1, modules may be omitted, replaced, or added as appropriate in accordance with the embodiment.

### [3 Operation example]

Fig. 12 is a flow chart illustrating an example of a processing procedure related to a determination of a geofence according to the present embodiment. The processing procedure described below is an example of an information processing method to be executed by a computer (information processing apparatus 1). However, the processing procedure described below is merely an example and each step may be modified as much as possible. In addition, with respect to the processing procedure described below, steps can be omitted, replaced, or added as appropriate in accordance with the embodiment.

### (Step S101)

In step S101, the controller 11 operates as the first acquirer 111 and acquires the current position 20 as measured by the positioning module 16. In one example, the positioning module 16 may be deployed in the vehicle MV. Accordingly, the acquired current position 20 may be constituted of a current position of the vehicle MV. Once the current position 20 is acquired, the controller 11 advances processing to a next step S102.

### (Step S102)

In step S102, the controller 11 operates as the second acquirer 112 and acquires the measurement precision 25 of the current position 20. In one example, the acquired measurement precision 25 may include a dilution of precision value (DOP value). Once the measurement precision 25 is acquired, the controller 11 advances the processing to a next step S103. Note that the timing of executing the processing of step S102 need not be limited to such an example and may be modified as appropriate in accordance with the embodiment. The processing of step S102 may be executed at any timing before step S104 to be described later. In another example, the processing of step S102 may be executed after the processing of step S103 to be described later. In another example, the processing of step S102 may be executed before step S101. The processing of step S102 may be executed at least partially in parallel with the processing of step S101.

### (Step S103)

In step S103, the controller 11 operates as the determiner 113. The controller 11 determines whether the acquired current position 20 is inside or outside an object geofence defined by the held geofence definition data 30. Accordingly, the controller 11 acquires a provisional determination result 40 of the object geofence. In one example, when the geofence definition data 30 is constituted of the main body data 301, the action data 303, and the geometry data 305, the processing of step S103 may be constituted of the processing of the second step of the reference procedure during the inside/outside determination described above. The controller 11 advances processing to a next step S104 with respect to a geofence on which the determination processing has been completed.

Note that in one example, when a determination execution condition is set to the object geofence, the controller 11 may determine whether or not the set determination execution condition is satisfied at any timing before executing the processing of step S103. Whether or not the determination execution condition is satisfied may be determined as appropriate. The controller 11 may execute processing of step S103 and subsequent steps with respect to a geofence determined to satisfy the determination execution condition. On the other hand, with respect to a geofence determined not to satisfy the determination execution condition, the controller 11 may omit processing of step S103 and subsequent steps, return processing to step S101, and once again execute processing from step S101. When none of the geofences satisfy the determination execution condition, the controller 11 may also omit processing of at least one of step S101 and step S102. In one example, when the geofence definition data 30 is constituted of the main body data 301, the action data 303, and the geometry data 305, the processing of determining whether or not the determination execution condition is satisfied may be constituted of the processing of the first step of the reference procedure during the inside/outside determination described above.

### (Step S104)

In step S104, the controller 11 operates as the weighter 114 and weights the determination result 40 of the object geofence with the acquired measurement precision 25. In one example, weighting the determination result 40 with the measurement precision 25 may include determining a weight according to the reciprocal of the dilution of precision value (DOP value). Once weighting with respect to the determination result 40 is completed, the controller 11 advances processing to a next step S105.

### (Step S105)

In step S105, the controller 11 operates as the result ascertainer 115 and compares a sum of weights of each of the determination results of being inside and the determination results of being outside with the threshold 45. In one example, the threshold 45 may include the first threshold 450 and the second threshold 455 described above. The controller 11 may compare a sum of weights of the determination result 400 of "inside" with the first threshold 450 and compare a sum of weights of the determination result 405 of "outside" with the second threshold 455. The first threshold 450 may be set smaller than the second threshold 455. The second threshold 455 may be set smaller than the first threshold 450. The first threshold 450 may be set equal to the second threshold 455 (in other words, the threshold may be common). The controller 11 determines whether or not the sum of weights of the determination results of either inside or outside has exceeded the threshold 45 according to a result of the comparisons.

When both the sums of weights of the determination results of being inside and the determination results of being outside do not exceed the threshold, the controller 11 returns processing to step S101 and once again executes processing from step S101. The controller 11 repeatedly executes the processing of step S101 to step S104 until the sum of weights of the determination results of either inside or outside exceeds the threshold 45. Accordingly, the weighted determination results 40 are accumulated with respect to the object geofence. On the other hand, when the sum of weights of the determination results of either inside or outside in the accumulated determination results 40 exceeds the threshold 45, the controller 11 advances processing to a next step S106.

Note that in one example, depending on the embodiment such as the definition of weight by the measurement precision 25 or the setting of the threshold 45, the weights of the determination results of either inside or outside may exceed the threshold 45 in one execution of processing due to the measurement precision 25 being extremely high. Accordingly, the processing of step S101 to step S104 may not be repeated. An advance to processing of a next step S106 (ascertainment of determination result) may be allowed after one execution of such processing.

### (Step S106)

In step S106, the controller 11 operates as the result ascertainer 115 and ascertains the determination result 50 of the object geofence with whichever determination result having exceeded the threshold 45. In other words, the controller 11 selects whichever determination result having exceeded the threshold 45 in the determination result of being inside and the determination result of being outside as the determination result 50 of the object geofence.

In one example, the ascertained determination result 50 of a previous inside/outside determination may exist with respect to at least a part of the geofences due to the continuous execution of inside/outside determinations. When the ascertained determination result 50 of a previous inside/outside determination exists, the controller 11 may further determine a transition state of the current position 20 with respect to the geofence according to the previous and current ascertained determination results 50. A determination result of the transition state may be included in the ascertained determination result 50. Once the determination result 50 is ascertained, the controller 11 advances the processing to a next step S107.

### (Step S107)

In step S107, the controller 11 operates as the output processor 116 and outputs information 55 related to the ascertained determination result 50.

An output destination and a content of the information 55 to be output may be respectively selected as appropriate in accordance with the embodiment. In one example, the controller 11 may output the ascertained determination result 50 described above as it is. The output destination may be, for example, a RAM, the storage 12, the output device 15, or another computer (including an external main memory). For example, the controller 11 may save the current ascertained determination result 50 in a memory resource for use in the next and subsequent inside/outside determinations.

In addition, in one example, the controller 11 may determine whether or not an action execution condition of a geofence is satisfied according to the ascertained determination result 50. With respect to a geofence determined to satisfy the action execution condition, the controller 11 may execute the action specified by the action content. Outputting information related to the determination result of a geofence may include determining whether or not the action execution condition is satisfied and executing an action of the geofence satisfying the action execution condition. Executing the action may include controlling operations of the vehicle MV such as controlling the operating modes described above, controlling prohibiting photography, and outputting advertisements. When the action to be executed includes output of information such as advertisement, the information 55 related to the ascertained determination result 50 may include information output by the action. In one example, when the geofence definition data 30 is constituted of the main body data 301, the action data 303, and the geometry data 305, the processing related to the execution of the action may be constituted of the processing of the third step and the fourth step of the reference procedure during the inside/outside determination described above. Once output of the information 55 is completed, the controller 11 advances processing to a next step S108.

In step S108, the controller 11 determines whether or not processing is to be ended. A determination criteria may be arbitrarily set. In one example, the controller 11 may determine not to end the processing until an end instruction is given. On the other hand, when an end instruction is given, the controller 11 may determine to end the processing. For example, the end instruction may be given by any method such as terminating/suspending the application or stopping the apparatus.

When the controller 11 determines not to end the processing, the controller 11 returns processing to step S101 and once again executes processing from step S101. Accordingly, the controller 11 may continuously execute the inside/outside determinations with respect to geofences defined by the held geofence definition data 30. On the other hand, when the controller 11 determines to end the processing, the controller 11 ends the processing procedure related to the inside/outside determination of geofences according to the present operation example. Note that the timing of ending the processing need not be limited to such an example. The controller 11 may end the processing procedure related to the inside/outside determinations of geofences at any timing. In addition, in one example, the controller 11 may execute the series of processing of step S101 to step S108 in real-time.

### [Features]

In the present embodiment, due to the processing of step S102 and step S104, the determination result 40 of a geofence is weighted according to the measurement precision 25 of the current position 20. After the processing of step S101 to step S104, the final determination result 50 is ascertained in step S106. Accordingly, not only the number of times the same determination result has been obtained but a quality of the measurement precision 25 of the position is also used as an indicator for obtaining the ascertained determination result 50. By accumulating the quality of the measurement precision 25 of the position along with the number of times that the same determination result has been obtained, a certainty of the determination result 50 can be increased, for example, by increasing the number of determinations when the measurement precision 25 of the position is low or respecting determination results 40 with high measurement precision 25. Therefore, according to the present embodiment, an improvement in the determination precision of a geofence can be expected even in a situation where an error can occur in the measurement of a position by the positioning module 16.

### [4 Modifications]

While the embodiment of the present disclosure has been described using specific terms, the forgoing description is in all respects merely illustrative of the disclosure. The processing steps and means described in the present disclosure may be freely combined and implemented insofar as no technical contradictions arise. In addition, various improvements or modifications may be made as appropriate in the embodiment described above.

### [5 Supplement]

The processing steps and means described in the present disclosure may be freely combined and implemented insofar as no technical contradictions arise.

In addition, processing described as being performed by one apparatus may be shared and executed by a plurality of apparatuses. Alternatively, processing described as being performed by different apparatuses may be executed by one apparatus. In a computer system, what kind of hardware configuration is used to realize each function can be changed in a flexible manner.

The present disclosure can also be realized by supplying a computer program implementing the functions described in the above embodiment to a computer and having one or more processors of the computer read and execute the program. Such a computer program may be provided to the computer by a non-transitory computer-readable storage medium that can be connected to a system bus of the computer or may be provided to the computer over a network. The non-transitory computer-readable storage medium may include, for example, any type of disk, a read-only memory (ROM), a random access memory (RAM), an EPROM, an EEPROM, a magnetic card, a flash memory, an optical card, a semiconductor drive, and any type of media suitable for storing electronic instructions. The disk may include, for example, a magnetic disk and an optical disk. The magnetic disk may include, for example, a hard disk drive (HDD). The optical disk may include, for example, a CD-ROM, a DVD disk, and a Blu-ray Disc. The semiconductor drive may include, for example, a solid state drive.

## Claims

1. A program (81) for causing a computer (1) to execute an information processing method, wherein
the information processing method includes:
acquiring a current position (20) as measured by a positioning module (16);
acquiring a measurement precision (25) of the acquired current position (20);
determining whether the acquired current position (20) is inside or outside an object geofence;
weighting a determination result (40) of the object geofence with the acquired measurement precision (25);
accumulating weighted determination results (40) by repeatedly acquiring the current position (20), acquiring the measurement precision (25), determining whether the current position (20) is inside or outside the object geofence, and weighting the determination result (40) with the measurement precision (25);
when a sum of weights of determination results of either inside or outside in the accumulated determination results (40) exceeds a threshold (45), ascertaining a determination result of the object geofence with whichever determination result having exceeded the threshold (45); and
outputting information related to the ascertained determination result (50).

2. The program (81) according to claim 1, wherein
the acquired measurement precision (25) includes a dilution of precision value.

3. The program (81) according to claim 2, wherein
weighting the determination result (40) with the measurement precision (25) includes determining a weight according to a reciprocal of the dilution of precision value.

4. The program (81) according to claim 1, wherein
the positioning module (16) is deployed in a vehicle (MV), and
the acquired current position (20) is constituted of a current position (20) of the vehicle (MV).

5. The program (81) according to claim 1, wherein the threshold (45) includes:
a first threshold (450) for ascertaining a determination result that the current position (20) is inside the object geofence; and
a second threshold (455) for ascertaining a determination result that the current position (20) is outside the object geofence, and
the first threshold (450) is set smaller than the second threshold (455).

6. The program (81) according to claim 1, wherein the threshold (45) includes:
a first threshold (450) for ascertaining a determination result that the current position (20) is inside the object geofence; and
a second threshold (455) for ascertaining a determination result that the current position (20) is outside the object geofence, and
the second threshold (455) is set smaller than the first threshold (450).

7. An information processing apparatus (1), comprising a controller (11) configured to execute:
acquiring a current position (20) as measured by a positioning module (16);
acquiring a measurement precision (25) of the acquired current position (20);
determining whether the acquired current position (20) is inside or outside an object geofence;
weighting a determination result (40) of the object geofence with the acquired measurement precision (25);
accumulating weighted determination results (40) by repeatedly acquiring the current position (20), acquiring the measurement precision (25), determining whether the current position (20) is inside or outside the object geofence, and weighting the determination result (40) with the measurement precision (25);
when a sum of weights of determination results of either inside or outside in the accumulated determination results (40) exceeds a threshold (45), ascertaining a determination result of the object geofence with whichever determination result having exceeded the threshold (45); and
outputting information related to the ascertained determination result (50).

8. The information processing apparatus (1) according to claim 7, wherein
the acquired measurement precision (25) includes a dilution of precision value.

9. The information processing apparatus (1) according to claim 8, wherein
weighting the determination result (40) with the measurement precision (25) includes determining a weight according to a reciprocal of the dilution of precision value.

10. The information processing apparatus (1) according to claim 7, wherein
the positioning module (16) is deployed in a vehicle (MV), and
the acquired current position (20) is constituted of a current position (20) of the vehicle (MV).

11. The information processing apparatus (1) according to claim 7, wherein
the threshold (45) includes:
a first threshold (450) for ascertaining a determination result that the current position (20) is inside the object geofence; and
a second threshold (455) for ascertaining a determination result that the current position (20) is outside the object geofence, and
the first threshold (450) is set smaller than the second threshold (455).

12. The information processing apparatus (1) according to claim 7, wherein
the threshold (45) includes:
a first threshold (450) for ascertaining a determination result that the current position (20) is inside the object geofence; and
a second threshold (455) for ascertaining a determination result that the current position (20) is outside the object geofence, and
the second threshold (455) is set smaller than the first threshold (450).

13. An information processing method to be executed by a computer (1), comprising:
acquiring a current position (20) as measured by a positioning module (16);
acquiring a measurement precision (25) of the acquired current position (20);
determining whether the acquired current position (20) is inside or outside an object geofence;
weighting a determination result (40) of the object geofence with the acquired measurement precision (25);
accumulating weighted determination results (40) by repeatedly acquiring the current position (20), acquiring the measurement precision (25), determining whether the current position (20) is inside or outside the object geofence, and weighting the determination result (40) with the measurement precision (25);
when a sum of weights of determination results of either inside or outside in the accumulated determination results (40) exceeds a threshold (45), ascertaining a determination result of the object geofence with whichever determination result having exceeded the threshold (45); and
outputting information related to the ascertained determination result (50).

14. The information processing method according to claim 13, wherein
the acquired measurement precision (25) includes a dilution of precision value.

15. The information processing method according to claim 14, wherein
weighting the determination result (40) with the measurement precision (25) includes determining a weight according to a reciprocal of the dilution of precision value.
